# EUROPEAN PATENT APPLICATION

(11) **EP 4 579 363 A1**
(43) Date of publication of application: **02.07.2025**
(21) Application number: 23857024.6
(22) Date of filing: 13.07.2023
(51) Int. Cl.: G05B 19/4093, B21D 28/36, B23D 36/00, B23Q 41/08

(54) **NESTING DEVICE, MACHINING SCHEDULE INFORMATION CREATION METHOD, AND MACHINING SCHEDULE INFORMATION CREATION PROGRAM**

(30) Priority: 22.08.2022 JP 2022131598
(71) Applicant: Amada Co., Ltd., Isehara-shi, Kanagawa 259-1196 (JP)
(72) Inventor: KADOTANI Goro, Isehara-shi, Kanagawa 259-1196 (JP)
(74) Representative: Grünecker Patent- und Rechtsanwälte PartG mbB
(86) International application number: PCT/JP2023/025958
(87) International publication number: WO 2024/042907

(57) **Abstract**

A nesting device is configured to be able to execute: a production arrangement information acquisition operation of acquiring production arrangement information regarding a product including one or more parts; a sheet data identification operation of identifying available sheet data in which the part included in the production arrangement information acquired in the production arrangement information acquisition operation is nested, from a past sheet data group; a sheet data selection operation of selecting adopted sheet data to be used for machining from the available sheet data; and a machining schedule information creation operation of creating machining schedule information regarding the selected adopted sheet data.

## Description

### Technical Field

The present invention relates to a nesting device, a machining schedule information creation method, and a machining schedule information creation program.

### Background Art

Conventionally, there is a sheet metal machining system including a production management device that generates a machining schedule based on sheet machining data obtained by nesting according to production instructions and manages the machining schedule for each workpiece sheet, and a sheet metal machining facility that is interconnected with the production management device via a communication network to execute the machining schedule received from the production management device (Patent Literature 1, etc.).

In the conventional sheet metal machining system, the production management device includes a production management unit, a process scheduler (progress management), a dynamic nesting & CAM processing unit, and a job controller. The process scheduler (progress management) generates and manages a machining schedule to be executed by the sheet metal machining facility based on production instructions from the production management unit. When the process scheduler (progress management) generates a machining schedule, the dynamic nesting & CAM processing unit performs a blank layout operation of nesting part data onto workpiece sheets and a CAM operation of generating machining data for the workpiece sheets.

### Citation List

### Patent Literature

Patent Literature 1: WO2005/047998

### Summary of Invention

### Technical Problem

However, in conventional sheet metal machining systems, it is often the case that one operator is responsible for nesting for one machine, and the operator manually selects production instructions for nesting. Therefore, there are problems that as the number of the machines increases, the number of operators engaged in nesting works increases, and as the number of production instructions increases, the man-hours also increase.

Furthermore, while reusing past sheet data can reduce the number of production instructions for new nesting, the nesting still requires man-hours since whether to perform new nesting or reuse the sheet data nested in the past is determined by the operators. There is also a problem that reusing the past sheet data requires time and effort for managing the past sheet data.

One aspect of the present invention relates to a nesting device, a machining schedule information creation method, and a machining schedule information creation program, capable of reducing the man-hours for nesting.

### Solution to Problem

A nesting device according to one aspect of the present invention is configured to be able to execute: a production arrangement information acquisition operation of acquiring production arrangement information regarding a product including one or more parts; a sheet data identification operation of identifying available sheet data in which the part included in the production arrangement information acquired in the production arrangement information acquisition operation is nested, from a past sheet data group; a sheet data selection operation of selecting adopted sheet data to be used for machining from the available sheet data; and a machining schedule information creation operation of creating machining schedule information regarding the selected adopted sheet data.

A machining schedule information creation method according to one aspect of the present invention includes: acquiring production arrangement information regarding a product including one or more parts; identifying available sheet data in which the part included in the production arrangement information acquired in the acquiring is nested, from a past sheet data group; selecting adopted sheet data to be used for machining from the available sheet data; and creating machining schedule information regarding the selected adopted sheet data.

A machining schedule information creation program according to one aspect of the present invention causes a nesting device to execute: a production arrangement information acquisition operation of acquiring production arrangement information regarding a product including one or more parts; a sheet data identification operation of identifying available sheet data in which the part included in the production arrangement information acquired in the production arrangement information acquisition operation is nested, from a past sheet data group; a sheet data selection operation of selecting adopted sheet data to be used for machining from the available sheet data; and a machining schedule information creation operation of creating machining schedule information regarding the selected adopted sheet data.

The nesting device, the machining schedule information creation method, and the machining schedule information creation program according to one aspect of the present invention identify available sheet data for parts included in the production arrangement information from a past sheet data group and create machining schedule information, which makes it possible to reduce the man-hours for nesting.

### Advantageous Effect of Invention

The nesting device, the machining schedule information creation method, and the machining schedule information creation program according to one aspect of the present invention are capable of reducing the man-hours for nesting.

### Brief Description of Drawings

[Figure 1] Figure 1 is a schematic diagram showing a manufacturing support system according to an embodiment of the present invention.
[Figure 2] Figure 2 is a functional block diagram showing a nesting device of the present embodiment.
[Figure 3] Figure 3 is a diagram showing an example of production arrangement information of the present embodiment.
[Figure 4] Figure 4 is a diagram showing an example of an adopted sheet data selection operation of the present embodiment.
[Figure 5] Figure 5 is a diagram showing an example of the adopted sheet data selection operation of the present embodiment.
[Figure 6] Figure 6 is a diagram showing an example of the adopted sheet data selection operation of the present embodiment.
[Figure 7] Figure 7 is a diagram showing an example of the adopted sheet data selection operation of the present embodiment.
[Figure 8] Figure 8 is a diagram showing an example of the adopted sheet data selection operation of the present embodiment.
[Figure 9] Figure 9 is a diagram showing an example of available sheet data of the present embodiment.
[Figure 10] Figure 10 is a diagram showing an example of the production arrangement information of the present embodiment.
[Figure 11] Figure 11 is a diagram showing an example of the adopted sheet data selection operation of the present embodiment.
[Figure 12] Figure 12 is a diagram showing an example of preferential selection in the adopted sheet data selection operation of the present embodiment.
[Figure 13] Figure 13 is a flow chart showing an example of a manufacturing support method of the present embodiment.

### Description of Embodiment

In the following, a preferred embodiment for carrying out the present invention will be described by using the drawings. Note that the following embodiment does not limit the invention according to the claims, and all combinations of the features described in the embodiment are not necessarily essential for the solution of the invention.

### [Overall Configuration of Manufacturing Support System According to Present Embodiment]

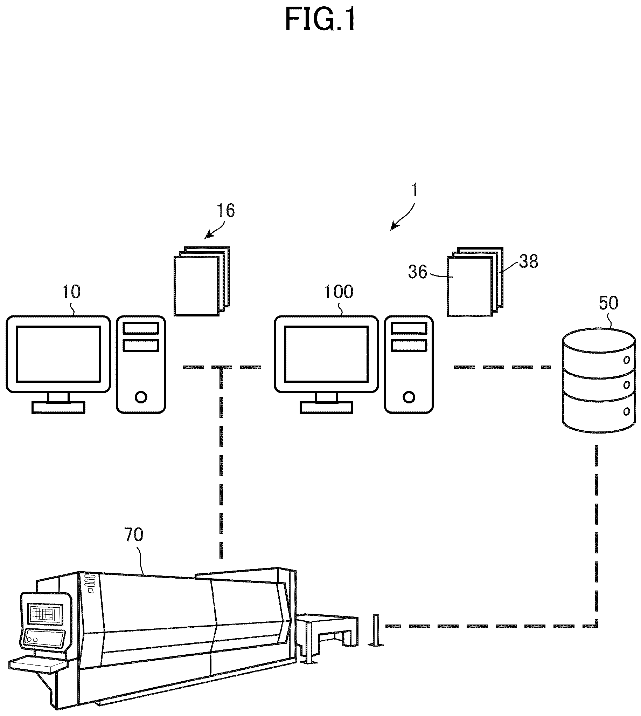

Figure 1 is a schematic diagram showing a manufacturing support system according to an embodiment of the present invention.

First, with reference to Figure 1, a manufacturing support system 1 according to an embodiment of the present invention will be schematically described. The manufacturing support system 1 according to the present embodiment manages a blanking machine 70 that cuts out a metal plate (hereinafter referred to as a sheet in the present embodiment) with a predetermined size into any shape. The manufacturing support system 1 generally includes a nesting device 100 that functions as a design support unit, as shown in Figure 1. The manufacturing support system 1 also includes a production management device 10 that functions as a production management unit, a server 50, and the blanking machine 70. These devices are communicably connected with each other.

The production management device 10 is an electronic computer such as a desktop personal computer, a laptop computer, or a tablet terminal. The production management device 10 manages order information, product information including one or more parts, manufacturing process information of the product and parts, and progress information of each process, and performs production arrangement of the product. In addition, when performing production arrangement of the product, the production management device 10 creates production arrangement information 12 regarding the product. The production management device 10 saves the created production arrangement information 12 in the server 50.

The production arrangement information 12 includes information about a customer, the product and parts, and machining programs for the parts. The information about the product and parts includes, for example, a product name, part names, production delivery dates of the product and parts, expected machining dates of the product and parts, manufacturing process information of the product and parts, quantities of the product and parts, manufacturing numbers of the product and parts, and information about workpieces. The product process information refers to information indicating the processes until a product is completed, such as bending processes after blanking, secondary processes such as deburring, and assembly processes such as welding, screwing, and inspection. The information about workpieces includes, for example, the type of workpieces, and the thickness of plates.

The production management device 10 is further configured to be able to output a production arrangement document 16 of the created production arrangement information 12. The production arrangement document 16 includes the contents of the production arrangement information 12 and a barcode. A user can check the production arrangement information 12 related to the production arrangement document 16 by reading the barcode with the nesting device 100 or the like, for example.

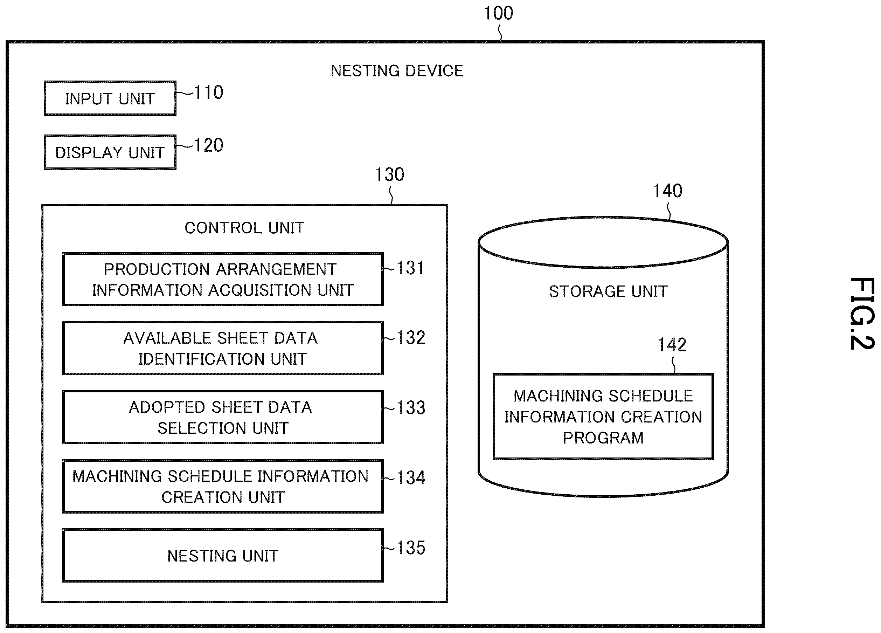

Figure 2 is a functional block diagram showing the nesting device 100 of the present embodiment.

The nesting device 100, which is an electronic computer such as a desktop personal computer, a laptop computer or a tablet terminal, includes an input unit 110, a display unit 120, a control unit 130, and a storage unit 140, as shown in Figure 2. The nesting device 100 has computer-aided design (CAD)/computer-aided manufacturing (CAM) software.

The input unit 110 is constituted of, for example, input devices such as a keyboard, a mouse, a touchpad, and a joystick, and operating the input unit 110 enables an information input function usually required in the nesting device 100 as well as operations such as selecting adopted sheet data US described later and nesting of new sheet data NS described later, for example. With such a configurations, the nesting device 100 allows manual operations, such as selecting the adopted sheet data US or nesting the new sheet data NS, via the input unit 110.

The display unit 120 includes a display as a display device to provide a screen display function usually required in the nesting device 100 and to also display a selection screen for the adopted sheet data US, a nesting screen, and the like. In addition, the display unit 120 can be constituted of a touch screen having a function of the input unit 110. When the display unit 120 is constituted of a touch panel, a user can input various types of information, such as selection of the adopted sheet data US or nesting of new sheet data NS, into the nesting device 100 by operating the display unit 120, for example.

Note that the configurations of the input unit 110 and the display unit 120 are not limited to the above-described configurations, and the input unit 110 and the display unit 120 may be any other units (for example, display means, input means or the like that is remotely available) as long as they have equivalent functions.

The control unit 130 is constituted of, for example, an integrated arithmetic calculation device having a central processing unit (CPU) and a graphics processing unit (GPU). The control unit 130 includes, as shown in Figure 2, a production arrangement information acquisition unit 131, an available sheet data identification unit 132, an adopted sheet data selection unit 133, a machining schedule information creation unit 134, and a nesting unit 135.

The production arrangement information acquisition unit 131 is configured to be able to execute a production arrangement information acquisition operation of acquiring the production arrangement information 12 created by the production management device 10. In the present embodiment, the production arrangement information acquisition unit 131 acquires the production arrangement information 12 saved in the server 50, though the production arrangement information acquisition unit 131 is not limited thereto, and may directly acquire the production arrangement information 12 from the production management device 10. The production arrangement information acquisition unit 131 may also acquire the production arrangement information 12 each time the production management device 10 creates the production arrangement information 12, or may collectively acquire a plurality of pieces of production arrangement information 12. In the present embodiment, the production arrangement information acquisition unit 131 automatically acquires the production arrangement information 12, though the production arrangement information acquisition unit 131 is not limited thereto. The user also manually enables the production arrangement information acquisition unit 131 to acquire the production arrangement information 12 by loading the production arrangement document 16 onto the nesting device 100 or by selecting the production arrangement information 12 via the input unit 110.

The available sheet data identification unit 132 is configured to be able to execute a sheet data identification operation of identifying the available sheet data AS in which the parts included in the production arrangement information 12 acquired by the production arrangement information acquisition unit 131 in the production arrangement information acquisition operation are nested, from a sheet data list L described later. Specifically, the available sheet data identification unit 132 identifies the available sheet data AS including the same parts, from the sheet data list L, based on parts information such as the name of the parts and the quantity of the parts included in the production arrangement information 12.

Here, the available sheet data identification unit 132 identifies the sheet data including all the parts in the production arrangement information 12 as the available sheet data AS, and also identifies the sheet data including only some parts in the production arrangement information 12 as the available sheet data AS.

The adopted sheet data selection unit 133 is configured to be able to execute a sheet data selection operation of selecting the adopted sheet data US to be used for machining from the available sheet data AS identified in the sheet data identification operation by the available sheet data identification unit 132.

Here, when there is only one piece of available sheet data AS, the adopted sheet data selection unit 133 selects the available sheet data AS as the adopted sheet data US, and therefore the sheet data identification operation and the sheet data selection operation can be executed as a single operation.

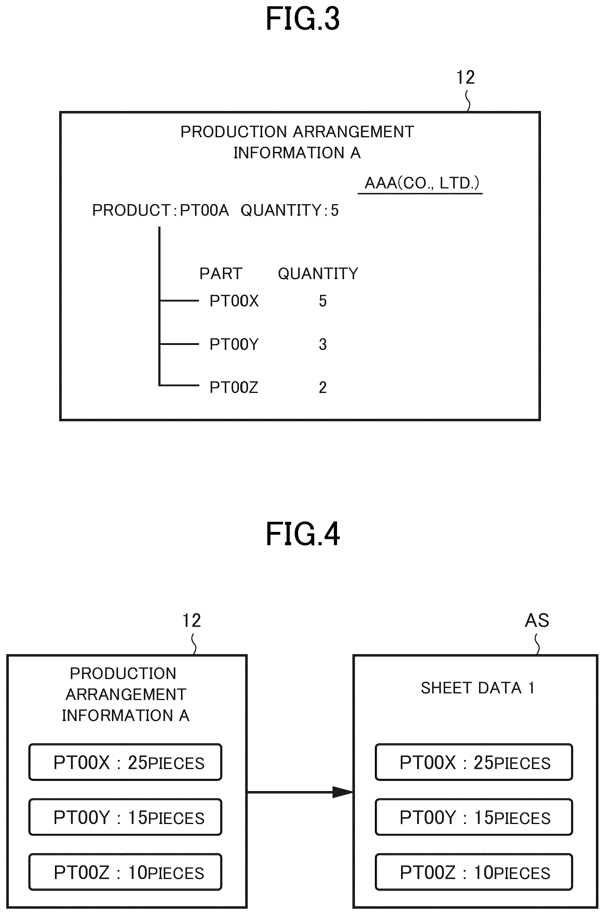

Figure 3 is a diagram showing an example of the production arrangement information of the present embodiment.

As an example of the sheet data selection operation, the sheet data selection operation for the production arrangement information 12 shown in Figure 3 will be described. The production arrangement information 12 (production arrangement information A) shown in Figure 3 includes products PT00A and their parts: PT00X; PT00Y; and PT00Z. A single product PT00A is constituted of five parts PT00X, three parts PT00Y, and two parts PT00Z, and the quantity of the products PT00A in production arrangement is five. Therefore, the production arrangement information A requires 25 parts PT00X, 15 parts PT00Y, and 10 parts PT00Z.

Figure 4 is a diagram showing an example of the adopted sheet data selection operation of the present embodiment.

For example, when the available sheet data identification unit 132 identifies sheet data 1 shown in Figure 4 as the available sheet data AS, the sheet data 1 includes the parts PT00X, PT00Y, and PT00Z, and the quantity of each part matches the production arrangement information A. Therefore, the adopted sheet data selection unit 133 selects the sheet data 1 as the adopted sheet data US.

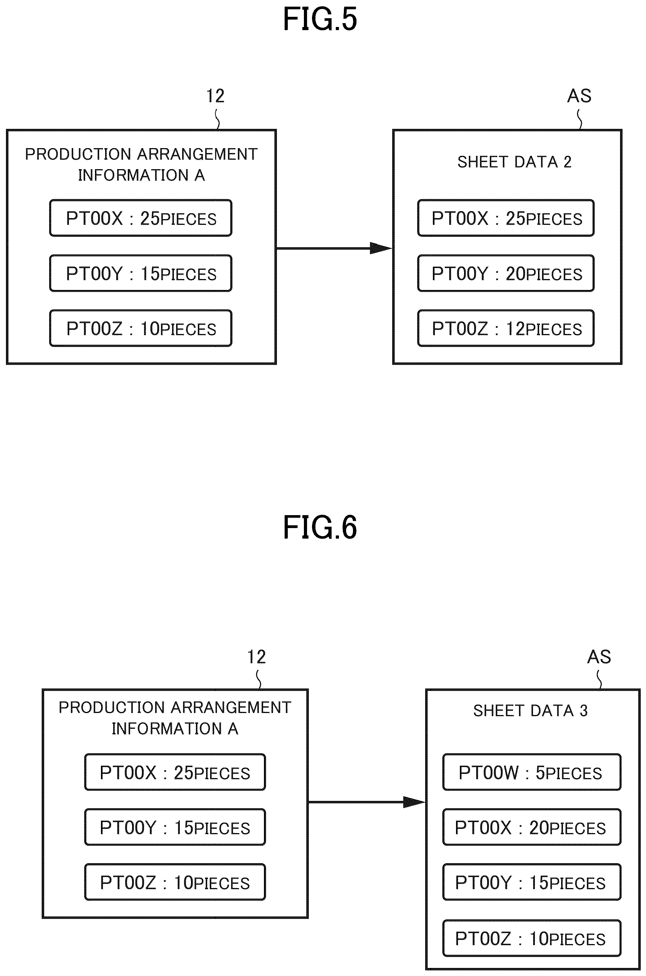

Figure 5 is a diagram showing an example of the adopted sheet data selection operation of the present embodiment.

Here, the adopted sheet data selection unit 133 can select available sheet data AS including the parts in the production arrangement information 12 as the adopted sheet data US even when the quantity of the parts in the available sheet data AS is larger than that in the production arrangement information 12. For example, sheet data 2 shown in Figure 5 includes 25 parts PT00X, 20 parts PT00Y, and 12 parts PT00Z. Although the quantity of the parts PT00X and PT00Y in the sheet data 2 is larger than that in the production arrangement information A, the adopted sheet data selection unit 133 selects the sheet data 2 as the adopted sheet data US.

Figure 6 is a diagram showing an example of the adopted sheet data selection operation of the present embodiment.

Here, the adopted sheet data selection unit 133 can select available sheet data AS including the parts in the production arrangement information 12 as the adopted sheet data US, even when the available sheet data AS includes parts that are not arranged in the production arrangement information 12. For example, sheet data 3 shown in Figure 6 includes five parts PT00W, 20 parts PT00X, 15 parts PT00Y, and 10 parts PT00Z. Although the sheet data 3 includes the parts PT00W which are not in the production arrangement information A, the adopted sheet data selection unit 133 selects the sheet data 3 as the adopted sheet data US.

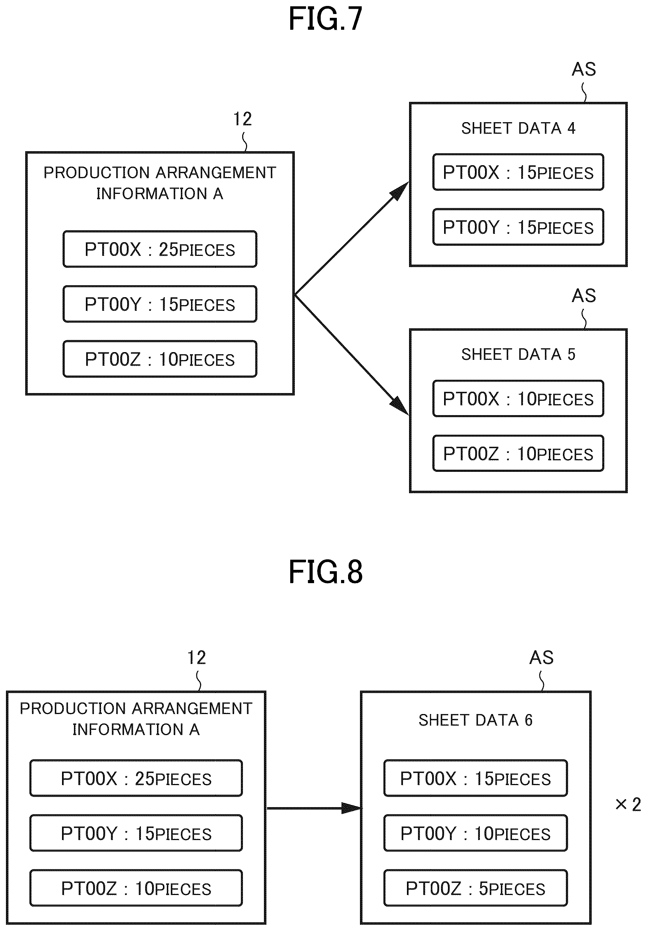

Figure 7 is a diagram showing an example of the adopted sheet data selection operation of the present embodiment.

The adopted sheet data selection unit 133 is further configured to select a combination of the plurality of pieces of available sheet data AS as the adopted sheet data US. For example, sheet data 4 shown in Figure 7 includes 15 parts PT00X and 15 parts PT00Y. Sheet data 5 also includes 10 parts PT00X and 10 parts PT00Z. When the available sheet data identification unit 132 identifies the sheet data 4 and the sheet data 5 as the available sheet data AS, the adopted sheet data selection unit 133 selects a combination of the sheet data 4 and the sheet data 5 as the adopted sheet data US since the combination of the sheet data 4 and the sheet data 5 satisfies the quantity of each part that is arranged in the production arrangement information A.

Figure 8 is a diagram showing an example of the adopted sheet data selection operation of the present embodiment.

The adopted sheet data selection unit 133 may further select the same available sheet data AS as the adopted sheet data US a plurality of times. For example, sheet data 6 shown in Figure 8 includes 15 parts PT00X, 10 parts PT00Y, and five parts PT00Z. When the available sheet data identification unit 132 identifies the sheet data 6 as the available sheet data AS, the adopted sheet data selection unit 133 selects the sheet data 6 as the adopted sheet data US twice since the sheet data 6 selected twice satisfies the quantity of each part arranged in the production arrangement information A.

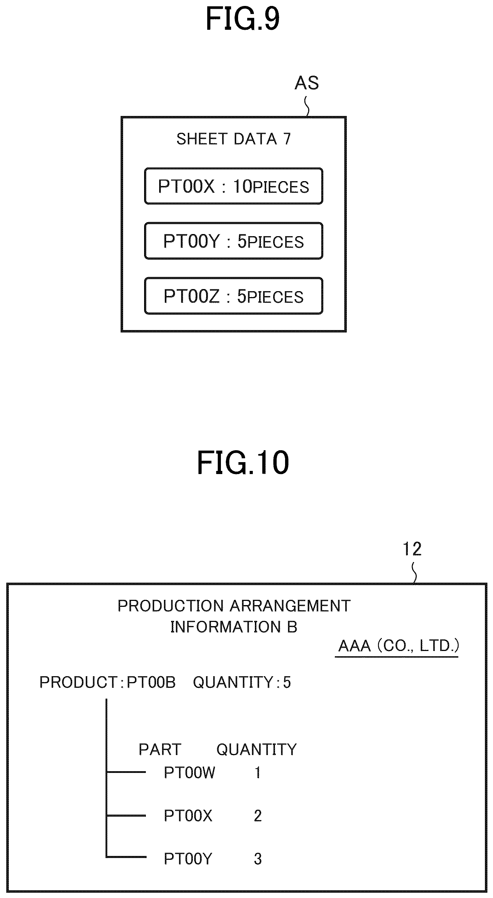

Figure 9 is a diagram showing an example of the available sheet data of the present embodiment.

Here, the adopted sheet data selection unit 133 can also combine selecting a combination of the plurality of pieces of available sheet data AS and selecting the same available sheet data AS a plurality of times. When there is a plurality of combinations of the available sheet data AS, the adopted sheet data selection unit 133 is configured to select as the adopted sheet data US the combination that is least in the total number of pieces of available sheet data AS. For example, sheet data 7 shown in Figure 9 includes 10 parts PT00X, five parts PT00Y, and five parts PT00Z. When the available sheet data identification unit 132 identifies the sheet data 7 as the available sheet data AS, the quantity of each part arranged in the production arrangement information A can be satisfied by selecting the sheet data 7 three times. However, since the total number of the pieces of sheet data becomes three, the adopted sheet data selection unit 133 selects either the combination of the sheet data 4 and the sheet data 5 having a total of two pieces of sheet data, or selecting the sheet data 6 twice, when the sheet data 4 to 6 are also identified as the available sheet data AS. Here, selection from the combinations that are identical in total number of the pieces of sheet data may be determined based on selection priority setting described later, or may be determined based on different priority settings.

Figure 10 is a diagram showing an example of the production arrangement information of the present embodiment.

Furthermore, the available sheet data identification unit 132 and the adopted sheet data selection unit 133 may identify the available sheet data AS for a group of two or more pieces of production arrangement information 12, and may select the adopted sheet data US from the available sheet data AS. Assume the case where, for example, the production arrangement information acquisition unit 131 acquires production arrangement information B shown in Figure 10 in addition to the production arrangement information A. The production arrangement information B includes products PT00B and their parts PT00W, PT00X, and PT00Y. A single product PT00B is constituted of a single part PT00W, two parts PT00X, and three parts PT00Y, and the quantity of the products PT00B in the production arrangement is five. Therefore, the production arrangement information B requires five parts PT00W, 10 parts PT00X, and 15 parts PT00Y.

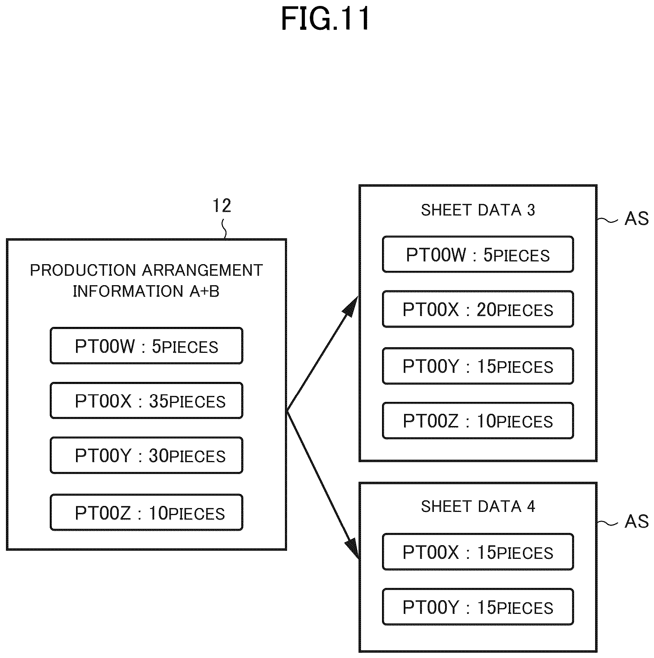

Figure 11 is a diagram showing an example of the adopted sheet data selection operation of the present embodiment.

In this case, when the production arrangement information A and the production arrangement information B are combined, the arrangement quantity of each part is as follows: five parts PT00W, 35 parts PT00X, 30 parts PT00Y, and 10 parts PT00Z. In this case, since the arrangement quantity matches the quantity of each part included in the sheet data, the adopted sheet data selection unit 133 selects the sheet data 3 and the sheet data 4 in combination as the adopted sheet data US for the production arrangement information A and the production arrangement information B.

The adopted sheet data selection unit 133 according to the present embodiment can set the selection priority when there is a plurality of pieces of available sheet data AS. For example, the adopted sheet data selection unit 133 is configured to be able to preferentially select the available sheet data AS with a higher sheet yield as the adopted sheet data US. In the present embodiment, "higher in sheet yield" means that there are a large number of nesting parts and less scraps when the sheet is actually machined.

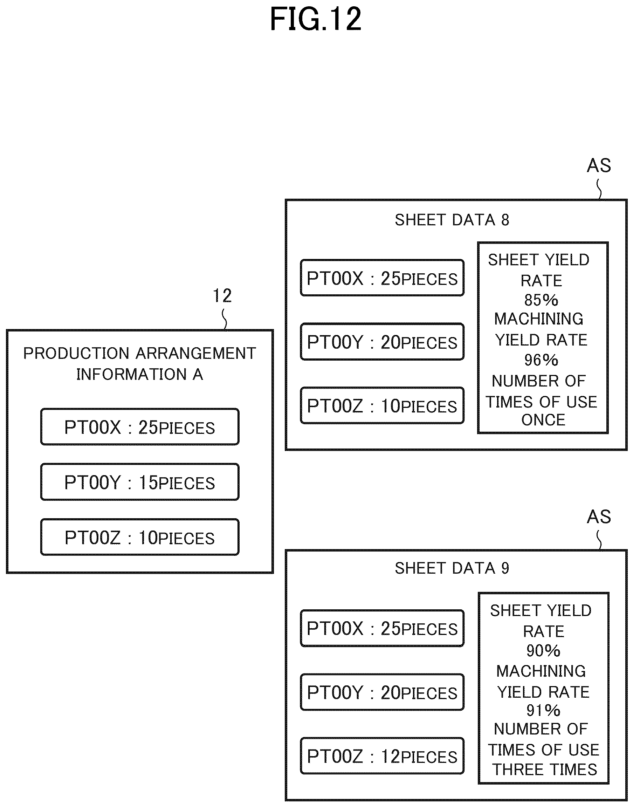

Figure 12 is a diagram showing an example of preferential selection in the adopted sheet data selection operation of the present embodiment.

Assume the case where, for example, sheet data 8 and sheet data 9 are identified as the available sheet data AS for the production arrangement information A as shown in Figure 12. The sheet data 8 has a sheet yield rate of 85%, and the sheet data 9 has a sheet yield rate of 90%. Under such circumstances, the adopted sheet data selection unit 133 selects the sheet data 9 with a higher sheet yield as the adopted sheet data US under the condition of preferentially selecting the available sheet data AS with a higher sheet yield as the adopted sheet data US.

The adopted sheet data selection unit 133 may also be configured to be able to preferentially select the available sheet data AS with a higher machining yield as the adopted sheet data US. In the present embodiment, "higher machining yield" means that the number of good products is high and a defective rate is low in an actually obtained product production quantity, and also includes that there are less suction errors or the like of robots that transports the parts and it is less likely that machining stops in the middle of a series of blanking processes, for example.

Assume the case where, for example, the sheet data 8 and the sheet data 9 are identified as available sheet data AS for the production arrangement information A as shown in Figure 12. The sheet data 8 has a machining yield rate of 96%, and the sheet data 9 has a machining yield rate of 91%. Under such circumstances, the adopted sheet data selection unit 133 selects the sheet data 8 with a higher machining yield as the adopted sheet data US under the condition of preferentially selecting the available sheet data AS with a higher machining yield as the adopted sheet data US.

The adopted sheet data selection unit 133 may further be configured to be able to preferentially select the available sheet data AS with a larger number of times of use as the adopted sheet data US. Assume the case where, for example, the sheet data 8 and the sheet data 9 are identified as the available sheet data AS for the production arrangement information A as shown in Figure 12. The number of times that the sheet data 8 is used is once, and the number of times that the sheet data 9 is used is three times. Under such circumstances, the adopted sheet data selection unit 133 selects the sheet data 9 that is larger in the number of times of use as the adopted sheet data US under the condition of preferentially selecting the available sheet data AS that is larger in the number of times of use as the adopted sheet data US.

For example, the above described information such as the sheet yield, the machining yield, and the number of times that the sheet is used can be acquired from a later described machining history, which are transferred from the blanking machine 70 to the production management device 10, and it is preferable that the sheet data list L and the machining history are associated with each other.

Note that the selection priority setting by the adopted sheet data selection unit 133 is not limited to the setting described above, and the priority can be set for various items. For example, the priority may be set in consideration of a stock status of the sheets. The adopted sheet data selection unit 133 preferentially selects as the adopted sheet data US the available sheet data AS that is for machining the sheets sufficiently in stock. The priority setting can also be performed so as to set the priority only for any one of the items as well as to set the priority in multiple ways for a combination of the items.

The machining schedule information creation unit 134 is configured to be able to execute a machining schedule information creation operation of creating machining schedule information I regarding the adopted sheet data US selected by the adopted sheet data selection unit 133. The machining schedule information creation unit 134 is configured to create machining schedule information I regarding new sheet data NS, which will be described later. The machining schedule information creation unit 134 saves the created machining schedule information I in the server 50.

The machining schedule information I includes a schedule creation date of the machining schedule information I, a schedule name, an expected machining date, an expected machine, a sheet name, a listing of parts included in the sheet, and information about the parts. In the present embodiment, the machining schedule information I may be a concept including both a collection of machining schedule information regarding a plurality of pieces of sheet data and machining schedule information regarding a single piece of sheet data, or may be either one.

Further, the nesting device 100 is configured to be able to output a schedule instruction document 36 of the created machining schedule information I. The schedule instruction document 36 includes the contents of the machining schedule information I and a barcode. The user can check the machining schedule information I related to the schedule instruction document 36 and load an NC control program by reading the barcode with the blanking machine 70, for example. The schedule instruction document 36 includes a plurality of program instruction documents 38. The program instruction documents 38 include a schedule creation date, a sheet name, sheet data, a list of the parts included in the sheet, the quantity of parts, and an expected machining date, etc.

The nesting unit 135 performs nesting that is to select parts with the same thickness included in the production arrangement information 12 and to arrange programs for those parts without gaps, based on the production arrangement information 12 output from the production management device 10. The nesting unit 135 is configured to be able to execute a sheet data creation operation of creating new sheet data NS for the part for which the available sheet data AS is not identifiable by the available sheet data identification unit 132 in the sheet data identification operation.

The storage unit 140 includes a storage medium such as a hard disk drive (HDD) or a solid state drive (SSD) and stores various pieces of data in a readable and writable manner. The storage unit 140 stores a machining schedule information creation program 142 as shown in Figure 2. In addition, the storage unit 140 stores a program required for controlling each unit of the nesting device 100.

The machining schedule information creation program 142 causes the nesting device 100 to execute: a production arrangement information acquisition operation of acquiring the production arrangement information 12; a sheet data identification operation of identifying available sheet data AS in which the part included in the production arrangement information 12 acquired in the production arrangement information acquisition operation is nested, from the sheet data list L; a sheet data selection operation of selecting the adopted sheet data US to be used for machining from the available sheet data AS; and a machining schedule information creation operation of creating the machining schedule information I regarding the selected adopted sheet data US.

The server 50 includes a storage medium such as an HDD or an SSD to store a production technology management database and the sheet data list L that is created as a database that functions as a past sheet data group. The production technology management database includes the production arrangement information 12 created by the production management device 10 and the machining schedule information I created by the nesting device 100. The data saved in the production technology management database is referenced by the production management device 10, the nesting device 100, and the blanking machine 70. The server 50 can adopt various known configurations, and therefore detailed description thereof will be omitted.

The blanking machine 70 is a device for machining sheets under NC control, such as a laser processing machine, a turret punch press, a plasma machine, or a water jet machine. The blanking machine 70 is configured to be able to communicate with the production management device 10, the server 50, and the nesting device 100.

The blanking machine 70 performs blanking by reading the sheet data of the machining schedule information I stored in the production technology management database of the server 50. In addition, the blanking machine 70 transmits a machining history to the production management device 10 at the time of start of the blanking, at the time of interruption of the blanking, and at the time of completion of the blanking. The machining history includes information such as times corresponding to the start of the machining, the interruption of the machining, and the completion of the machining for each sheet.

### [Machining Schedule Information Creation Method According to Present Embodiment]

Next, a description will be given of a machining schedule information creation method by the nesting device 100 according to the present embodiment. The machining schedule information creation method according to the present embodiment generally includes: a production arrangement information acquisition step of acquiring production arrangement information 12; a sheet data identification step of identifying available sheet data AS in which the part included in the production arrangement information 12 acquired in the production arrangement information acquisition step is nested, from the sheet data list L; a sheet data selection step of selecting adopted sheet data US to be used for machining from the available sheet data AS; and a machining schedule information creation step of creating machining schedule information I regarding the selected adopted sheet data US.

The machining schedule information creation method also includes a sheet data creation step of creating new sheet data NS for the part for which the available sheet data AS is not identifiable in the sheet data identification step. The machining schedule information creation step creates the machining schedule information I regarding the new sheet data NS. The machining schedule information creation method further includes a yield determination step of determining whether or not a sheet yield in the new sheet data NS created in the sheet data creation step is equal to or more than a predetermined value.

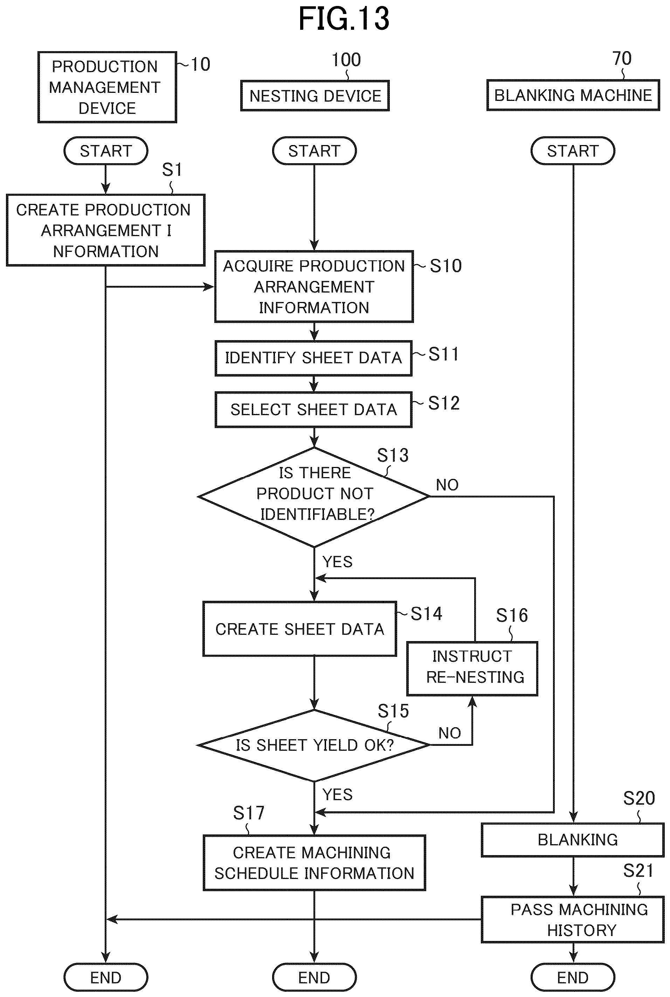

Figure 13 is a flow chart showing an example of the manufacturing support method of the present embodiment.

The manufacturing support method, including the machining schedule information creation method according to the present embodiment, will be described in detail with reference to Figure 13. First, the production management device 10 creates the production arrangement information 12 (S1 in Figure 13). The production management device 10 saves the created production arrangement information 12 into the production technology management database of the server 50. In addition, the production management device 10 outputs the production arrangement document 16 of the created production arrangement information 12. Thereafter, the production management device 10 passes the production arrangement document 16 to the nesting device 100.

The production arrangement information acquisition unit 131 of the control unit 130 in the nesting device 100 acquires the production arrangement information 12 of the production arrangement document 16 from the production technology management database of the server 50 (S10 in Figure 13: production arrangement information acquisition step). Then, the available sheet data identification unit 132 in the control unit 130 of the nesting device 100 identifies the available sheet data AS in which the parts included in the production arrangement information 12 acquired by the production arrangement information acquisition unit 131 are nested, from the sheet data list L in the server 50 (S11 in Figure 13: sheet data identification step).

Next, the adopted sheet data selection unit 133 in the control unit 130 of the nesting device 100 selects the adopted sheet data US to be used for machining from the available sheet data AS identified by the available sheet data identification unit 132 of the control unit 130 (S12 in Figure 13: sheet data selection step). When a part for which the available sheet data AS is not identifiable by the available sheet data identification unit 132 of the control unit 130 is present in the parts included in the production arrangement information 12 acquired by the production arrangement information acquisition unit 131 of the control unit 130 (YES at S13 in Figure 13), the nesting unit 135 of the control unit 130 nests the part and creates new sheet data NS after or concurrently with the sheet data selection step (S14 in Figure 13: sheet data creation step).

When the yield of the new sheet data NS created by the nesting unit 135 of the control unit 130 in the nesting device 100 does not reach the predetermined value or more (NO at S15 in Figure 13: yield determination step), a re-nesting instruction is issued (S16 in Figure 13). The re-nesting may be performed automatically by the nesting unit 135 or manually performed by an operator via the input unit 110 of the nesting device 100.

Thereafter, the machining schedule information creation unit 134 of the control unit 130 in the nesting device 100 creates machining schedule information I regarding the adopted sheet data US and the new sheet data NS (S17 in Figure 13: machining schedule information creation step). Meanwhile, when the part for which the available sheet data AS is not identifiable by the available sheet data identification unit 132 of the control unit 130 is not present in the parts included in the production arrangement information 12 acquired by the production arrangement information acquisition unit 131 (NO at S13 in Figure 13), the machining schedule information creation unit 134 creates only the machining schedule information I of the adopted sheet data US.

The machining schedule information creation unit 134 of the control unit 130 in the nesting device 100 saves the created machining schedule information I in the production technology management database of the server 50. Then, the machining schedule information creation unit 134 outputs the schedule instruction document 36 of the created machining schedule information I. Note that the new sheet data NS is newly registered in the sheet data list L of the server 50.

After the machining schedule information I is created, the blanking machine 70 retrieves the machining schedule information I from the production technology management database of the server 50 and performs blanking (S20 in Figure 13). In addition, the blanking machine 70 passes the machining history to the production management device 10 at the time of start of the blanking, at the time of interruption of the blanking, and at the time of completion of the blanking (S21 in Figure 13). The production management device 10 saves the machining history passed from the blanking machine 70. In the above-described processes, a series of processes of the manufacturing support method according to the present embodiment is performed by the manufacturing support system 1.

### [Advantages of Nesting Device, Machining Schedule Information Creation Method, and Machining Schedule Information Creation Program According to Present Embodiment]

As described above, the nesting device 100 according to the present embodiment is configured to be able to execute: a production arrangement information acquisition operation of acquiring the production arrangement information 12 regarding a product including one or more parts; a sheet data identification operation of identifying the available sheet data AS in which the part included in the production arrangement information 12 acquired in the production arrangement information acquisition operation is nested, from a past sheet data group (sheet data list L); a sheet data selection operation of selecting the adopted sheet data US to be used for machining from the available sheet data AS; and a machining schedule information creation operation of creating the machining schedule information I regarding the selected adopted sheet data US.

With such configurations, the nesting device 100 according to the present embodiment has the advantage of being able to reduce the man-hours for nesting, since the nesting device 100 can create the machining schedule information I by automatically reusing the past sheet data from the production arrangement information 12.

In addition, the nesting device 100 according to the present embodiment is configured to be able to execute the sheet data creation operation of creating new sheet data NS for the part for which the available sheet data AS is not identifiable in the sheet data identification operation, and the machining schedule information creation operation creates the machining schedule information I regarding the new sheet data NS. With such configurations, the nesting device 100 has the advantage of being able to further reduce the man-hours for nesting, since the nesting device 100 can create the machining schedule information I by automatically performing the nesting even when the available sheet data AS cannot be found.

In the nesting device 100 according to the present embodiment, the sheet data selection operation is further configured to select a combination of the plurality of pieces of available sheet data AS as the adopted sheet data US. With such configurations, the nesting device 100 has the advantage of being able to further reduce the man-hours for nesting, since the nesting device 100 can create the machining schedule information I by automatically reusing the past sheet data even in the case where one piece of available sheet data AS does not satisfy all the parts or the quantity of each part included in the production arrangement information 12.

Furthermore, in the nesting device 100 according to the present embodiment, when there is a plurality of combinations of the available sheet data AS, the sheet data selection operation is configured to select as the adopted sheet data US the combination that is least in the total number of the pieces of available sheet data AS. With such configurations, the nesting device 100 has an advantage that the number of pieces of adopted sheet data US for managing the progress, and consequently the number of pieces of the machining schedule information I reduce, which makes it possible to reduce the burden of the progress management. Moreover, the nesting device 100 further has the advantage that the number of sheets (workpieces) used in machining reduces, which makes it possible to lower the manufacturing cost of the product.

In the nesting device 100 according to the present embodiment, when there is a plurality of pieces of available sheet data AS, the sheet data selection operation is configured to be able to preferentially select the available sheet data AS with a higher sheet yield. With such configurations, the nesting device 100 has the advantage of being able to reduce scraps of the sheet generated during blanking, thereby reducing the waste of workpieces.

In the nesting device 100 according to the present embodiment, when there is a plurality of pieces of available sheet data AS, the sheet data selection operation is further configured to be able to preferentially select the available sheet data AS with a higher machining yield. With such configurations, the nesting device 100 has the advantage of being able to automatically select the available sheet data AS with less product loss.

In the nesting device 100 according to the present embodiment, when there is a plurality of pieces of available sheet data AS, the sheet data selection operation is further configured to be able to preferentially select the available sheet data AS with a larger number of times of use. With such configurations, the nesting device 100 has the advantage of being able to reduce manufacturing troubles since the proven available sheet data AS is actively used as the adopted sheet data US.

### [Modifications]

While the preferred embodiment of the present invention has been described above, the technical scope of the present invention is not limited to the scope defined in the above-described embodiment. It is possible to make various changes or modifications to the above-described embodiment.

For example, in the above-described embodiment, description has been made that the nesting device 100 is configured to be able to execute the sheet data creation operation of creating new sheet data NS for the part for which the available sheet data AS is not identifiable in the sheet data identification operation, and the machining schedule information creation operation creates the machining schedule information I regarding the new sheet data NS, though the nesting device 100 is not limited thereto. Instead of the nesting device 100 executing the sheet data creation operation of creating new sheet data NS for the part for which the available sheet data AS is not identifiable in the sheet data identification operation, an operator may manually nest the part for which the available sheet data AS is not identifiable and create new sheet data NS.

In the above embodiment, description has been made that the sheet data selection operation is configured to select a combination of the plurality of pieces of available sheet data AS as the adopted sheet data US, though the sheet data selection operation is not limited thereto. The sheet data selection operation may be configured to select only a single available sheet data AS as the adopted sheet data US.

In the above-described embodiment, description has been made that when there is a plurality of combinations of the available sheet data AS, the sheet data selection operation is configured to select as the adopted sheet data US the combination that is least in the total number of the pieces of available sheet data AS, though the sheet data selection operation is not limited thereto. When there is a plurality of combinations of the available sheet data AS, the sheet data selection operation may not select as the adopted sheet data US the combination that is least in the total number of the pieces of available sheet data AS.

In the above-described embodiment, description has been made that when there is a plurality of pieces of available sheet data AS, the sheet data selection operation is configured to be able to preferentially select the available sheet data AS with a higher sheet yield, though the sheet data selection operation is not limited thereto. When there is a plurality of pieces of available sheet data AS, the sheet data selection operation may not preferentially select the available sheet data AS with a higher sheet yield.

In the above-described embodiment, description has been made that when there is a plurality of pieces of available sheet data AS, the sheet data selection operation is configured to be able to preferentially select the available sheet data AS with a higher machining yield, though the sheet data selection operation is not limited thereto. When there is a plurality of pieces of available sheet data AS, the sheet data selection operation may not preferentially select the available sheet data AS with a higher machining yield.

In the above-described embodiment, description has been made that when there is a plurality of pieces of available sheet data AS, the sheet data selection operation is configured to be able to preferentially select the available sheet data AS with a larger number of times of use, though the sheet data selection operation is not limited thereto. When there is a plurality of pieces of available sheet data AS, the sheet data selection operation may not preferentially select the available sheet data AS with a larger number of times of use.

In the above-described embodiment, description has been made that the manufacturing support system 1 includes the nesting device 100, the production management device 10, the server 50, and the blanking machine 70. However, without being limited thereto, the manufacturing support system 1 may be configured such that some or all of the above devices are integrated.

In the above-described embodiment, the past sheet data group has been described as the sheet data list L that is created as a database, though the past sheet data group is not limited thereto and may not be compiled systematically like a database. For example, the past sheet data may be stored in a disorganized manner.

In the above-described embodiment, description has been made that the manufacturing support system 1 includes the server 50, and the production technology management database is stored in the server 50, though the manufacturing support system 1 is not limited thereto. The manufacturing support system 1 may not include the server 50, and the data created by the production management device 10 and the nesting device 100 may be saved in the respective devices. The sheet data list L may also be stored in the storage unit 140 of the nesting device 100. In addition, the production management device 10 and the nesting device 100 may directly exchange created data without through the server 50.

In the above-described embodiment, description has been made that the blanking machine 70 is configured to be able to communicate with the production management device 10, the nesting device 100, and the server 50. However, without being limited thereto, the blanking machine 70 may not be able to communicate with the production management device 10, the nesting device 100, and the server 50.

### Reference Signs List

1: Manufacturing support system
10: Production management device
12: Production arrangement information
16: Production arrangement document
36: Schedule instruction document
38: Program instruction document
50: Server
70: Blanking machine
100: Nesting device
110: Input unit
120: Display unit
130: Control unit
131: Production arrangement information acquisition unit
132: Available sheet data identification unit
133: Adopted sheet data selection unit
134: Machining schedule information creation unit
135: Nesting unit
140: Storage unit
142: Machining schedule information creation program AS: Available sheet data
I: Machining schedule information
L: Sheet data list
NS: New sheet data
US: Adopted sheet data

## Claims

1. A nesting device, configured to be able to execute:
a production arrangement information acquisition operation of acquiring production arrangement information regarding a product including one or more parts;
a sheet data identification operation of identifying available sheet data in which the part included in the production arrangement information acquired in the production arrangement information acquisition operation is nested, from a past sheet data group;
a sheet data selection operation of selecting adopted sheet data to be used for machining from the available sheet data; and
a machining schedule information creation operation of creating machining schedule information regarding the selected adopted sheet data.

2. The nesting device according to claim 1, configured to be able to execute a sheet data creation operation of creating new sheet data for the part for which the available sheet data is not identifiable in the sheet data identification operation, wherein
the machining schedule information creation operation creates the machining schedule information regarding the new sheet data.

3. The nesting device according to claim 1 or 2, wherein the sheet data selection operation is configured to select a combination of a plurality of pieces of the available sheet data as the adopted sheet data.

4. The nesting device according to claim 3, wherein when there is a plurality of combinations of the available sheet data, the sheet data selection operation is configured to select as the adopted sheet data the combination that is least in a total number of pieces of the available sheet data.

5. The nesting device according to claim 1 or 2, wherein when there is a plurality of pieces of available sheet data, the sheet data selection operation is configured to be able to preferentially select the available sheet data with a higher sheet yield.

6. The nesting device according to claim 1 or 2, wherein when there is a plurality of pieces of available sheet data, the sheet data selection operation is configured to be able to preferentially select the available sheet data with a higher machining yield.

7. The nesting device according to claim 1 or 2, wherein when there is a plurality of pieces of the available sheet data, the sheet data selection operation is configured to be able to preferentially select the available sheet data with a larger number of times of use.

8. A machining schedule information creation method, comprising:
acquiring production arrangement information regarding a product including one or more parts;
identifying available sheet data in which the part included in the production arrangement information acquired in the acquiring is nested, from a past sheet data group;
selecting adopted sheet data to be used for machining from the available sheet data; and
creating machining schedule information regarding the selected adopted sheet data.

9. A machining schedule information creation program, for causing a nesting device to execute:
a production arrangement information acquisition operation of acquiring production arrangement information regarding a product including one or more parts;
a sheet data identification operation of identifying available sheet data in which the part included in the production arrangement information acquired in the production arrangement information acquisition operation is nested, from a past sheet data group;
a sheet data selection operation of selecting adopted sheet data to be used for machining from the available sheet data; and
a machining schedule information creation operation of creating machining schedule information regarding the selected adopted sheet data.
